# EUROPÄISCHE PATENTANMELDUNG

(11) **EP 1 569 293 A1**
(43) Veröffentlichungstag der Anmeldung: **31.08.2005**
(21) Anmeldenummer: 04004216.0
(22) Anmeldetag: 25.02.2004
(51) Int. Cl.: H01M 8/06, H01M 8/04

(54) **Verfahren zum Betrieb einer Brennstoffzellenanlage und Brennstoffzellenanlage**

(71) Anmelder: SIEMENS AKTIENGESELLSCHAFT, 80333 München (DE)
(72) Erfinder: Bette, Willi, 91056 Erlangen (DE); Coerlin, Detlev, 91056 Erlangen (DE); Stühler, Walter, 96114 Hirschaid (DE); Voitlein, Ottmar, 91475 Lonnerstadt (DE)

(57) **Zusammenfassung**

Beim Betrieb einer Brennstoffzellenanlage (2) wird dieser mit Hilfe einer Flüssigkeitsringpumpe (8) Umgebungsluft (L) zugeführt. In der Luft (L)enthaltene Verunreinigungen werden von der Betriebsflüssigkeit (F) der Flüssigkeitsringpumpe (8) aufgenommen. Die Belastung der Betriebsflüssigkeit (F) mit den Verunreinigungen wird kontrolliert. Insbesondere wird die Betriebsflüssigkeit (F) kontinuierlich über eine Reinigungseinrichtung (16) in einem Kreislauf geführt.

## Beschreibung

Die Erfindung bezieht sich auf ein Verfahren zum Betrieb einer Brennstoffzellenanlage sowie auf eine Brennstoffzellenanlage, wobei der Brennstoffzellenanlage mit Hilfe einer Flüssigkeitsringpumpe ein Prozessgas zugeführt wird.

Beim Betrieb einer Brennstoffzellenanlage wird üblicherweise einem aus gestapelten Brennstoffzellen gebildeten Brennstoffzellenblock zur Erzeugung elektrischen Stroms anodenseitig ein Brenngas, beispielsweise Wasserstoff, und kathodenseitig Luft oder Sauerstoff zugeführt. Es gibt mittlerweile eine Vielzahl von unterschiedlichen Arten von Brennstoffzellenanlagen, die sich im Hinblick auf ihren Aufbau, insbesondere im Hinblick auf den verwendeten Elektrolyt, sowie im Hinblick auf die notwendige Betriebstemperatur unterscheiden.

Wird Umgebungsluft als Prozessgas verwendet, so wird diese üblicherweise über Filter zugeführt, um sie vor Eintritt in den Brennstoffzellenblock von beispielsweise staubhaltigen Verunreinigungen zu reinigen. Dies ist insbesondere dann erforderlich, wenn die Brennstoffzellenanlage in einer Umgebung eingesetzt wird, in der eine hohe Belastung der Luft zu erwarten ist. Insbesondere beim mobilen Einsatz einer Brennstoffzellenanlage, beispielsweise im Schiffahrtsbereich für Boote oder U-Boote, ist eine Reinigung des Prozessgases erforderlich, um die Funktionsfähigkeit des Brennstoffzellenblocks, insbesondere bei der Verwendung von so genannten PEM-Brennstoffzellen, zu gewährleisten.

Zur Zuführung der Prozessgase ist beispielsweise aus EP 0 925 614 B1 oder EP 0 850 494 B1 die Verwendung einer Flüssigkeitsringpumpe zu entnehmen. Die Flüssigkeitsringpumpe bietet den Vorteil, dass automatisch mit der Verdichtung aufgrund des Wirkprinzips der Flüssigkeitsringpumpe zugleich auch eine Befeuchtung des Prozessgases erfolgt.

Der Erfindung liegt die Aufgabe zugrunde, einen verbesserten Betrieb einer Brennstoffzellenanlage zu ermöglichen.

Die Aufgabe wird gemäß der Erfindung gelöst durch ein Verfahren zum Betrieb einer Brennstoffzellenanlage, bei dem dieser mit Hilfe einer Flüssigkeitsringpumpe ein Prozessgas, insbesondere Umgebungsluft, zugeführt wird, wobei im Prozessgas enthaltene Verunreinigungen von der Betriebsflüssigkeit der Flüssigkeitsringpumpe aufgenommen und die Belastung der Betriebsflüssigkeit mit den Verunreinigungen kontrolliert wird.

Gemäß diesem Verfahren wird daher in vorteilhafter Weise die Flüssigkeitsringpumpe auch zu Reinigungszwecken herangezogen. Die Flüssigkeitsringpumpe erfüllt daher gleichzeitig mehrere Funktionen, nämlich Verdichten, Befeuchten und Reinigen des Prozessgases. Um die Reinigungsfunktion über die Betriebsdauer aufrecht zu erhalten, ist dabei weiterhin vorgesehen, dass die Belastung der Betriebsflüssigkeit mit den Verunreinigungen kontrolliert wird. Unter Kontrolle wird hierbei sowohl eine aktive Kontrolle verstanden, bei der durch Reinigungsmaßnahmen der Grad der Verschmutzung der Betriebsflüssigkeit unterhalb eines Grenzwertes gehalten wird, so dass eine Reinigung der Luft weiterhin über die Flüssigkeitsringpumpe möglich bleibt. Unter Kontrolle wird weiterhin auch eine passive Kontrolle dahingehend verstanden, dass der Grad der Verschmutzung der Betriebsflüssigkeit überwacht, also gemessen wird, um Informationen zu erhalten, ob noch eine ausreichende Reinigungswirkung vorliegt.

Die Erfindung nutzt hierbei das Wirkprinzip einer Flüssigkeitsringpumpe aus, bei der beim Verdichten des Gases eine Vermischung des Gases mit der Betriebsflüssigkeit der Flüssigkeitsringpumpe erfolgt. Durch die innige Vermischung mit der Betriebsflüssigkeit werden Verunreinigungen in der Betriebsflüssigkeit gelöst.Verunreinigen sind beispielsweise Staupartikel oder an Aerosolen und Staubpartikeln anhaftende Salze, wie sie vor allem in angesaugter Seeluft vorkommen. Diese Verunreinigungen gelangen daher nicht in die Gasräume der Brennstoffzellen und beeinträchtigen deren Betrieb und Funktionsfähigkeit nicht. Die aus der Luft ausgewaschenen Verunreinigungen reichern sich hierbei in der Betriebsflüssigkeit an.

Gemäß einer zweckdienlichen Weiterbildung ist vorgesehen, dass die Belastung der Betriebsflüssigkeit gemessen wird. Insbesondere wird hierbei die Leitfähigkeit der Betriebsflüssigkeit gemessen, um eine Angabe über ionische Verunreinigungen zu erhalten.

Um eine Schädigung des Brennstoffzellenblocks zu verhindern wird bei Übersteigen eines oberen Grenzwertes für die Belastung der Betriebsflüssigkeit der Betrieb des Brennstoffzellenblocks insbesondere automatisch unterbrochen. Zur Unterbrechung wird hierbei die Brennstoffzellenanlage entweder komplett abgeschaltet oder in eine "Leerlauf"-Betriebsstellung überführt, in der dem Brennstoffzellenblock kein Prozessgas mehr zugeführt wird, die Umwälzung der Betriebsflüssigkeit aber aufrecht erhalten wird. Sobald durch geeignete Maßnahmen die Belastung der Betriebsflüssigkeit wieder auf einen geringen Wert reduziert ist, so wird der normale Betrieb wieder aufgenommen.

Um die Belastung der Betriebsflüssigkeit gering zu halten bzw. zu reduzieren, ist in einer bevorzugten Weiterbildung vorgesehen, dass die Betriebsflüssigkeit bei Übersteigen eines unteren Grenzwertes für die Belastung ausgetauscht oder in einer Reinigungseinrichtung gereinigt wird. Diese Maßnahme zur Reduzierung der Belastung der Betriebsflüssigkeit wird daher nur von Zeit zu Zeit, also diskontinuierlich, durchgeführt. Hierbei können der obere und der untere Grenzwert identisch sein, so dass bei Erreichen dieses Grenzwertes einerseits der Betrieb des Brennstoffzellenblocks automatisch unterbrochen und parallel hierzu die Maßnahme zur Reduzierung der Belastung der Betriebsflüssigkeit eingeleitet wird.

In einer bevorzugten Ausgestaltung ist eine kontinuierliche Reinigung der Betriebsflüssigkeit vorgesehen. Hierzu wird vorzugsweise zumindest ein Teilstrom der Betriebsflüssigkeit in einem Kreislauf geführt, in dem eine Reinigungseinrichtung angeordnet ist. Durch diese Maßnahme wird die Belastung der Betriebsflüssigkeit dauernd auf einem ausreichend niedrigen Wert gehalten, so dass eine Unterbrechung des Betriebs des Brennstoffzellenblocks nicht erforderlich ist. Zweckdienlicherweise umfasst hierbei die Reinigungseinrichtung einen Ionentauscher, mit dessen Hilfe die ionischen Verunreinigungen entfernt oder zumindest reduziert werden.

Zur Verbesserung der Funktionsfähigkeit, insbesondere des Wirkungsgrads der Reinigungseinrichtung, ist in einer zweckdienlichen Weiterbildung vorgesehen, dass die Betriebsflüssigkeit über einen Wärmetauscher der Reinigungseinrichtung zugeführt wird. Über den Wärmetauscher erfolgt daher eine Temperierung, insbesondere Kühlung, der Betriebsflüssigkeit, um die Funktionsfähigkeit des Ionentauscher zu gewährleisten.

Zweckdienlicherweise wird die Funktionsfähigkeit der Reinigungseinrichtung überwacht, also deren Fähigkeit, die Belastungen in der Betriebsflüssigkeit zu reduzieren. Dies erfolgt entweder unmittelbar, beispielsweise über die Messung eines Parameters der Reinigungseinrichtung, um deren Anreicherung mit Verunreinigungen direkt zu ermitteln. Die Überwachung erfolgt alternativ hierzu mittelbar über die Messung der Belastung Betriebsflüssigkeit.
Wenn die Belastung insbesondere der aus der Reinigungseinrichtung austretenden Betriebsflüssigkeit einen bestimmten Grenzwert überschreiten, wird dies als Indiz dafür gewertet, dass die Reinigungseinrichtung nicht mehr funktionsfähig ist.

In dem Fall, dass nur noch eine unzureichende Reinigungsleistung der Reinigungseinrichtung festgestellt wird, wird diese vorzugsweise regeneriert und es wird während der Regenerationsphase auf eine weitere Reinigungseinrichtung umgeschalten oder der Betrieb des Brennstoffzellenblocks wird unterbrochen. Im Falle des Umschaltens auf eine weitere Reinigungseinrichtung ist ein unterbrechungsfreier Betrieb möglich.

Um den Aufbau kompakt und damit die Kosten einer Brennstoffzellenanlage möglichst gering zu halten, ist vorzugsweise weiterhin vorgesehen, dass die Betriebsflüssigkeit der Flüssigkeitsringpumpe zugleich als Kühlwasser für die Brennstoffzellenanlage verwendet wird.

Die Aufgabe wird erfindungsgemäß weiterhin gelöst durch eine Brennstoffzellenlanlage, bei der eine in eine Zuleitung für ein Prozssgas geschaltete Flüssigkeitsringpumpe zum Verdichten des angesaugten Prozessgases sowie zusätzlich eine Einrichtung zur Kontrolle der Verschmutzung der Betriebsflüssigkeit vorgesehen sind.

Die im Hinblick auf das Verfahren angeführten Vorteile und bevorzugten Weiterbildungen sind sinngemäß auch auf die Brennstoffzellenanlage zu übertragen.

Ein Ausführungsbeispiel der Erfindung wird im Folgenden anhand der Figuren näher erläutert. Es zeigen jeweils in schematischen und stark vereinfachten Blockbild-Darstellungen:
- FIG 1: das Prinzip einer Brennstoffzellenanlage in einer ersten Ausführungsvariante und
- FIG 2: das Prinzip einer Brennstoffzellenanlage gemäß einer zweiten Variante, bei der die Betriebsflüssigkeit der Flüssigkeitsringpumpe zugleich auch als Kühlflüssigkeit für den Brennstoffzellenblock verwendet wird.

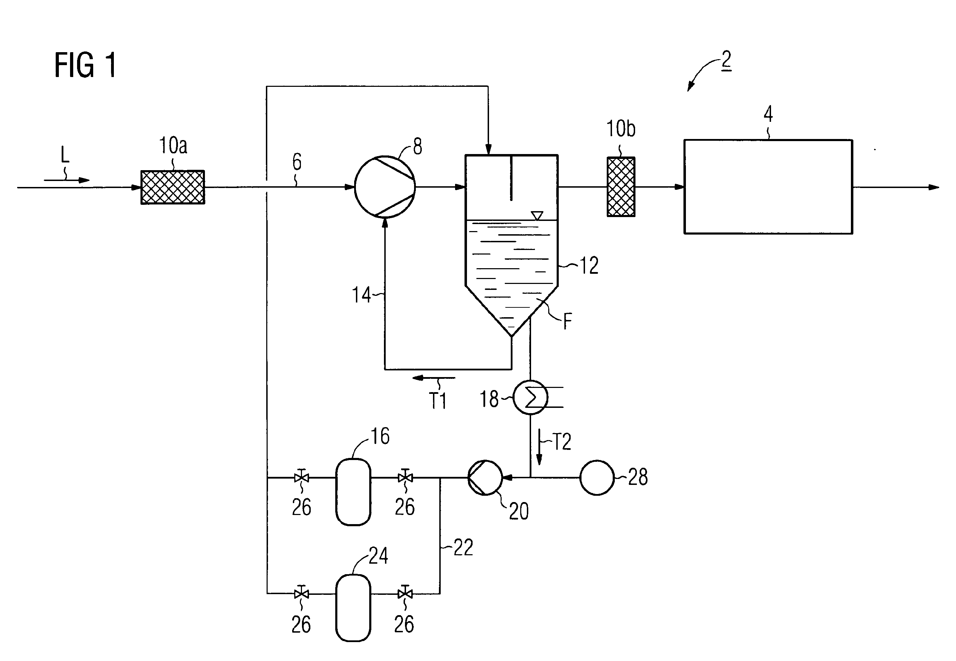

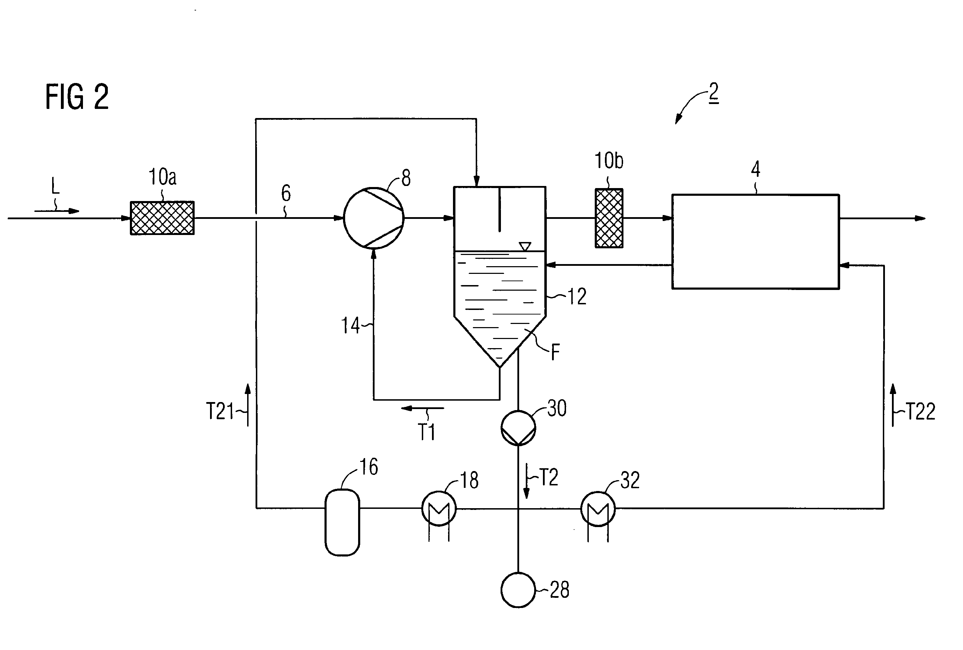

Eine Brennstoffzellenanlage 2 gemäß den FIG 1 und 2 umfasst einen Brennstoffzellenblock 4, der eine Vielzahl von einzelnen gestapelten Brennstoffzellen aufweist. Insbesondere werden hierzu PEM-Brennstoffzellen verwendet. Dem Brennstoffzellenblock 4 wird über eine Zuleitung 6 ein Prozessgas, hier Umgebungsluft L, zugeführt. Weiterhin wird dem Brennstoffzellenblock 4 in hier nicht dargestellter Weise ein Brenngas, beispielsweise Wasserstoff, zugeführt.

In der Zuleitung 6 ist eine Flüssigkeitsringpumpe 8 angeordnet, die auch als Wasserringverdichter bezeichnet wird. Im Betrieb wird die Luft L über einen ersten Filter 10a angesaugt, in der Flüssigkeitsringpumpe 8 verdichtet und über einen Wasserabscheider 12 und einen zweiten Filter 10b dem Brennstoffzellenblock 4 zugeführt. Aus dem Wasserabscheider 12 wird über eine Rückführleitung 14 eine Betriebsflüssigkeit F der Flüssigkeitsringpumpe 8 dieser wieder zugeführt. Ein erster Teilstrom T1 der Betriebsflüssigkeit F wird daher zwischen der Flüssigkeitsringpumpe 8 und dem Wasserabscheider 12 in einem kleinen Kreislauf geführt. Ein zweiter Teilstrom T2 der Betriebsflüssigkeit F wird über eine Reinigungseinrichtung 16 dem Wasserabscheider 12 wieder zugeführt. Der Teilstrom T2 wird daher ebenfalls in einem Kreislauf zwischen dem Wasserabscheider 12 und der Reinigungseinrichtung 16 geführt.

Gemäß der Ausführungsvariante nach FIG 1 ist zwischen dem Wasserabscheider 12 und der Reinigungseinrichtung 16 zunächst ein Wärmetauscher 18 und anschließend eine Umwälzpumpe 20 angeordnet. Zu der Reinigungseinrichtung 16 ist in einem parallel geführten Leitungsstrang 22 eine weitere Reinigungseinrichtung 24 angeordnet. Die beiden Reinigungseinrichtungen 16,24 lassen sich jeweils über Ventile 26 zu- oder abschalten.

Weiterhin ist ein Messgerät 28 vorgesehen, welches die Leitfähigkeit der der Reinigungseinrichtung 16 zugeführten Betriebsflüssigkeit F misst und überwacht.

Im Unterschied zu der Ausgestaltung nach FIG 1 ist bei der Ausführungsvariante nach FIG 2 vorgesehen, dass der Teilstrom T2 zugleich als Kühlflüssigkeit für den Brennstoffzellenblock 4 verwendet wird. In Strömungsrichtung der Betriebsflüssigkeit F ist hierbei nach dem Wasserabscheider 12 zunächst eine gemeinsame ausreichend groß dimensionierte Kühlwasserpumpe 30 vorgesehen. Im Anschluss hieran wird der Teilstrom T2 in zwei Unterteilströme T21 und T22 aufgeteilt. Die Verwendung einer gemeinsamen Kühlmittelpumpe 30 hat den Vorteil, dass lediglich eine Pumpe für die Umwälzung der Betriebsflüssigkeit in den Unterteilströmen T21 und T22 erforderlich ist.

Im Unterteilstrom T22 wird die Flüssigkeit in einem Kreislauf zwischen dem Wasserabscheider 12 und dem Brennstoffzellenblock 4 geführt. Im Unterteilstrom T21 sind in Strömungsrichtung nacheinander der Wärmetauscher 18 und die Reinigungseinrichtung 16 angeordnet. Auch hier kann - wie in FIG 1 dargestellt - eine weitere Reinigungseinrichtung 24 parallel zu der ersten Reinigungseinrichtung 16 geschaltet sein. Im zweiten Unterteilstrom T22 ist vor dem Brennstoffzellenblock 4 noch ein weiterer Wärmetauscher 22 angeordnet. Die Wärmetauscher 18,32 werden jeweils mit Kühlwasser zur Kühlung der Betriebsflüssigkeit F beaufschlagt.

Beim Betrieb der Brennstoffzellenanlage 2 wird über die Flüssigkeitsringpumpe 8 Luft L angesaugt, die über den ersten Luftfilter 10a beispielsweise von Staubpartikeln vorgereinigt wird. In der Flüssigkeitsringpumpe 8 wird die angesaugte Luft L aufgrund des Funktionsprinzips der Flüssigkeitsringpumpe 8 innig mit deren Betriebsflüssigkeit F vermischt. Dadurch wird die Luft L von in ihr enthaltenen Verschmutzungen gereinigt, die sich in der Betriebsflüssigkeit F anreichern. Derartige Verschmutzungen sind beispielsweise vom ersten Luftfilter 10a nicht zurückgehaltene feine Staubpartikel oder lösliche Bestandteile der Luft. Die verdichtete Luft verlässt zusammen mit einem Teil der Betriebsflüssigkeit F den Flüssigkeitsringverdichter 8 und wird dem Wasserabscheider 12 zugeführt, in dem die gewaschene Luft von der Betriebsflüssigkeit F aerosolfrei getrennt wird. Die Betriebsflüssigkeit F sammelt sich im unteren Bereich an, wohingegen die gereinigte Luft L aus dem Wasserabscheider 12 austritt und dem Brennstoffzellenblock 4 zugeführt wird. Der zwischen der Flüssigkeitsringpumpe 8 und dem Wasserabscheider 12 angeordnete zweite Luftfilter 10b hält die im Wasserabscheider 12 eventuell aufgewirbelten Partikel zurück.

Da die Betriebsflüssigkeit F im Umwälzkreislauf der Flüssigkeitsringpumpe 8 wieder zurückgeführt wird, reichern sich die Verunreinigungen zusehends an. Mit der Zeit würde daher die Belastung der Betriebsflüssigkeit F derart ansteigen, dass kein Reinigungseffekt mehr erzielt werden würde. Daher ist eine Kontrolle und insbesondere auch eine Reinigung der Betriebsflüssigkeit F vorgesehen. Zum einen wird hierzu der Grad der Verschmutzung durch das Messgerät 28 überwacht. Im vorliegenden Fall wird die Leitfähigkeit der Betriebsflüssigkeit F gemessen. Die Messung kann sowohl vor als auch nach der Reinigungseinrichtung 16 erfolgen. Die Messung und Überwachung der Leitfähigkeit erfolgt vorzugsweise automatisch.

Weiterhin sind zur Kontrolle der Betriebsflüssigkeit F die Reinigungseinrichtungen 16,24 vorgesehen. Und zwar wird während des Betriebs die Betriebsflüssigkeit F über die als Ionentauscher ausgebildete Reinigungseinrichtung 16 geführt. In dieser werden in der Betriebsflüssigkeit F enthaltene gelöste Ionen an Ionenaustauscherharzen des Ionentauschers gebunden und damit aus der Betriebsflüssigkeit F entfernt. Mit zunehmender Betriebsdauer erschöpft sich nach und nach die Kapazität des Ionentauschers und seine Fähigkeit, Ionen zu binden, lässt allmählich nach. Diese nachlassende Reinigungswirkung führt dazu, dass die Leitfähigkeit der Betriebsflüssigkeit F ansteigt. Die Reinigungseinrichtung 16 umfasst in einer nicht dargestellten Weiterbildung neben dem Ionentauscher auch noch weitere Komponenten, beispielsweise einen Staubabscheider oder Filter zur weitergehenden Reinigung der Betriebsflüssigkeit F.

Zur Aufrechterhaltung der Reinigungswirkung durch die Flüssigkeitsringpunpe 8 sind unterschiedliche Betriebsweisen möglich. Gemäß einer ersten Betriebsart wird bei Übersteigen eines unteren Grenzwertes für die Leitfähigkeit auf die weitere Reinigungseinrichtung 24 umgeschalten und die erste Reinigungseinrichtung 16 wird regeneriert.

In einer zweiten Betriebsart wird die Verunreinigung der Betriebsflüssigkeit F in der Rückführleitung 14 oder im Wasserabscheider 12 über das Messgerät 18 gemessen und der Teilstrom T2 und damit die Reinigungseinrichtung 16,24 wird nur dann bedarfsweise zugeschaltet, wenn die Betriebsflüssigkeit F einen erhöhten Verschmutzungsgrad oberhalb des unteren Grenzwertes aufweist (diskontinuierliche Reinigung). In einer vereinfachten Ausführung kann anstelle der Zuschaltung der Reinigungseinrichtung 16,24 auch ein Austausch oder Teilaustausch der Betriebsflüssigkeit F durch unbelastetes Frischwasser erfolgen.

Gemäß einer dritten Betriebsart ist weiterhin vorgesehen, dass bei Überschreiten eines oberen Grenzwertes für die Verunreinigungen in der Betriebsflüssigkeit F eine insbesondere automatische Abschaltung des Betriebs des Brennstoffzellenblocks 4 erfolgt. Hierzu ist beispielsweise eine nicht näher dargestellte Überwachungseinrichtung vorgesehen, die die vom Messgerät 28 ermittelten Messwerte ausliest und auswertet und bei Bedarf die automatische Abschaltung veranlasst. Alternativ hierzu wird anstelle der automatischen Abschaltung bei Überschreitung des oberen Grenzwertes ein Signal abgegeben, so dass die Abschaltung des Brennstoffzellenblocks 4 manuell vom Bedienpersonal vorgenommen werden kann.

Während der Abschaltung des Brennstoffzellenblocks 4 wird die Brennstoffzellenanlage 2 entweder im Leerlauf betrieben, also ohne Zuführung von Prozessgas, oder komplett abgeschaltet. Weiterhin wird nach Abschaltung eine Reinigungsmaßnahme eingeleitet, entweder die Regeneration der Reinigungseinrichtung 16 oder der zumindest teilweise Austausch der Betriebsflüssigkeit F mit Frischwasser.

Diese dritte Betriebsart ist zweckdienlicherweise als Sicherungsfunktion auf alle Fälle und in Ergänzung zu den beiden vorab genannten Betriebsarten vorgesehen. Sie ist jedoch auch unabhängig von den beiden anderen Betriebsarten möglich. In diesem Fall wird die Betriebsflüssigkeit F nur auf einen, nämlich den oberen Grenzwert für die Verschmutzung überwacht und der Betrieb der Brennstoffzellenanlage wird regelmäßig unterbrochen, wenn die Verschmutzung der Betriebsflüssigkeit den Grenzwert überschreitet.

## Patentansprüche

1. Verfahren zum Betrieb einer Brennstoffzellenanlage (2), bei dem dieser mit Hilfe einer Flüssigkeitsringpumpe (8) ein Prozessgas (L) zugeführt wird,
**dadurch gekennzeichnet , dass** im Prozessgas (L) enthaltene Verunreinigungen von der Betriebsflüssigkeit (F) der Flüssigkeitsringpumpe (8) aufgenommen und die Belastung der Betriebsflüssigkeit (F) mit den Verunreinigungen kontrolliert wird.

2. Verfahren nach Anspruch 1,
**dadurch gekennzeichnet , dass** die Belastung der Betriebsflüssigkeit, insbesondere deren Leitfähigkeit, gemessen wird.

3. Verfahren nach Anspruch 1 oder 2,
**dadurch gekennzeichnet , dass** bei Übersteigen eines oberen Grenzwertes für die Belastung der Betriebsflüssigkeit (F) der Betrieb eines Brennstoffzellenblocks (4) der Brennstoffzellenanlage (2) unterbrochen wird.

4. Verfahren nach einem der vorhergehenden Ansprüche,
**dadurch gekennzeichnet , dass** bei Übersteigen eines unteren Grenzwertes für die Belastung der Betriebsflüssigkeit (F) diese ausgetauscht oder in einer Reinigungseinrichtung (16,24) gereinigt wird.

5. Verfahren nach einem der vorhergehenden Ansprüche,
**dadurch gekennzeichnet , dass** zumindest ein Teilstrom (T2) der Betriebsflüssigkeit (F) in einem Kreislauf über die Reinigungseinrichtung (16,24) geführt wird.

6. Verfahren nach Anspruch 4 oder 5,
**dadurch gekennzeichnet , dass** die Reinigungseinrichtung (16,24) einen Ionentauscher umfasst.

7. Verfahren nach Anspruch 5 oder 6,
**dadurch gekennzeichnet , dass** die Betriebsflüssigkeit (F) der Reinigungseinrichtung (16,24) über einen Wärmetauscher (18,32) zugeführt wird.

8. Verfahren nach einem der Ansprüche 5 bis 7,
**dadurch gekennzeichnet , dass** die Funktionsfähigkeit der Reinigungseinrichtung (16,24) überwacht wird.

9. Verfahren nach einem der Ansprüche 5 bis 8,
**dadurch gekennzeichnet , dass** bei unzureichender Reinigungsleistung der Reinigungseinrichtung (16) diese regeneriert wird und auf eine weitere Reinigungseinrichtung (24) umgeschalten oder der Betrieb eines Brennstoffzellenblocks (4) der Brennstoffzellenanlage (2) unterbrochen wird.

10. Verfahren nach einem der vorhergehenden Ansprüche,
**dadurch gekennzeichnet , dass** die Betriebsflüssigkeit (F) zugleich als Kühlwasser für die Brennstoffzellenanlage (1) verwendet wird.

11. Brennstoffzellenanlage (2) mit einer Zuleitung (6) für ein Prozessgas (L) und einer in die Zuleitung (6) geschalteten Flüssigkeitsringpumpe (8) zum Verdichten des angesaugten Prozessgases (L),
**dadurch gekennzeichnet , dass** im Betrieb im Prozessgas (L) enthaltene Verunreinigungen von der Betriebsflüssigkeit (F) der Flüssigkeitsringpumpe (8) aufgenommen werden und dass eine Einrichtung (16,24,28) zur Kontrolle der Verschmutzung der Betriebsflüssigkeit (F) vorgesehen ist.
